# EUROPEAN PATENT SPECIFICATION

(11) **EP 3 616 901 B1**
(45) Date of publication and mention of the grant of the patent: **05.08.2026**
(21) Application number: 19192705.2
(22) Date of filing: 20.08.2019
(51) Int. Cl.: F16D 65/12, F16D 69/02, B32B 5/02, B32B 5/06, B32B 5/08, B32B 5/26, B32B 7/02, C04B 35/83

(54) **LAYERED CARBON FIBER PREFORM**
VORFORM AUS GESCHICHTETER KOHLENSTOFFFASER
PRÉFORME DE FIBRE DE CARBONE EN COUCHES

(30) Priority: 27.08.2018 US 201816113998
(43) Date of publication of application: 04.03.2020
(73) Proprietor: Honeywell International Inc., Morris Plains, NJ 07950 (US)
(72) Inventor: FRYSKA, Slawomir T., Morris Plains, NJ 07950 (US); GORDY, Bruce, Morris Plains, NJ 07950 (US)
(74) Representative: Haseltine Lake Kempner LLP

(56) References cited:
- EP-A1- 2 282 075
- WO-A1-02/081942
- KR-A- 20100 122 711
- US-A- 5 388 320
- US-A1- 2004 074 075

## Description

### TECHNICAL FIELD

The disclosure relates to the manufacture of carbon-carbon composite materials, such as the manufacture of aircraft brake discs made of carbon-carbon composite materials.

### BACKGROUND

Carbon-carbon composite materials are composite materials that include a matrix including carbon reinforced with carbon fibers. Carbon-carbon (C-C) composite components can be used in many high temperature applications. For example, the aerospace industry employs C-C composite components as friction materials for commercial and military aircraft, such as brake friction materials.

Some carbon-carbon composites, such as some carbon-carbon composite brake discs that are used in the aerospace industry, may be manufactured from porous preforms that include layers of carbon fiber, which may be densified using one or more of several processes, including chemical vapor deposition/chemical vapor infiltration (CVD/CVI), vacuum/pressure infiltration (VPI), or resin transfer molding (RTM), to infiltrate the porous preform with carbon. Prior to the densification process some preforms may be subjected to a needling process.

Prior art is known from EP2282075, WO02/081942 and US388320.

### SUMMARY

The invention describes a preform for a carbon-carbon composite according to claim 1.

The invention also describes a method according to claim 7.

The invention also describes a carbon-carbon composite according to claim 9.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example wheel and brake assembly that may include one or more of C-C composite disc brakes formed in accordance with the techniques of this disclosure.
FIG. 2 is a schematic perspective view of an example fibrous preform that may be used to manufacture a densified C-C composite such as the rotor and stator brake discs of FIG. 1.
FIG. 3 is a schematic view of an example duplex fabric that may be used to form at least a portion of a respective fibrous layer of the fibrous preform of FIG. 2.
FIG. 4 is a perspective view of an example C-C composite in the shape of a disc brake that may be produced from the fibrous preform of FIG. 2.
FIG. 5 is a flow diagram illustrating an example technique of manufacturing the fibrous preform and C-C composite of FIGS. 2 and 4, respectively.

### DETAILED DESCRIPTION

The present disclosure describes techniques for producing a carbon fiber preform. Such preforms may be used to produce a densified carbon-carbon (C-C) composite such as a C-C composite disc brake for use, e.g., in an aerial vehicle or other vehicle. The described preforms may include a plurality of fibrous layers superposed (e.g., fibrous layers stacked on one another) and needle-punched together to form the fibrous preform in the shape of an annulus. Each fibrous layer may be formed using a combination of web and tow carbon or carbon-precursor fibers. The fiber architectures of the respective fibrous layers may be selected depending on where the respective fibrous layer is positioned within the superposed stack of the fibrous layers (positioned relative to the central axis of the stack) direction to help tailor the physical and mechanical properties of the resultant C-C composite formed from the fibrous preform. In some examples, the fiber architectures of the described fibrous layers may be adjusted by, for example, altering the ratio of web fibers to tow fibers within a respective layer, altering the areal weight (e.g., weight of the fibers per unit area) within a respective layer, altering the relative thickness of a respective layer, or a combination thereof.

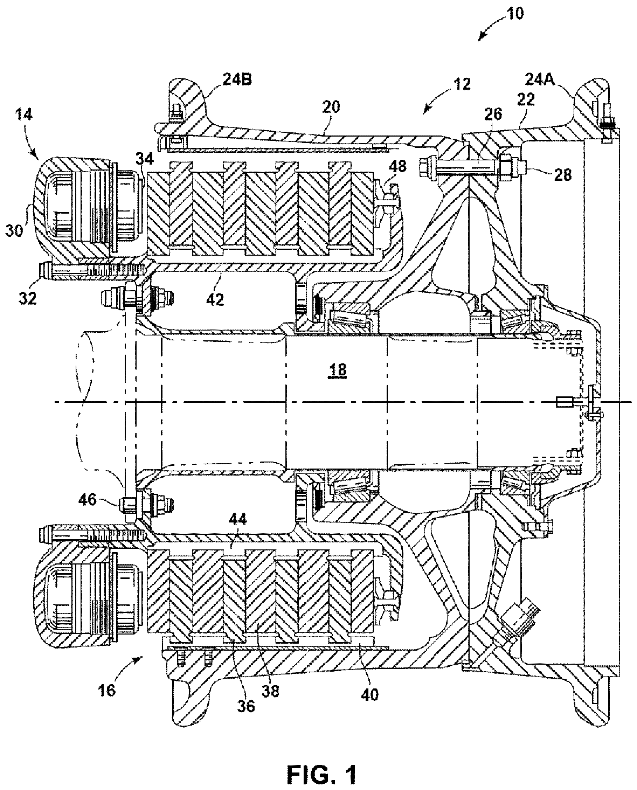

FIG. 1 is a conceptual diagram illustrating an example wheel and brake assembly 10 that may include one or more of C-C composite disc brakes formed in accordance with the techniques of this disclosure. For ease of description, examples of the disclosure will be described primarily with regard to aircraft brake assemblies formed of C-C composites. However, the techniques of this disclosure may be used to form C-C composite components other than aircraft brake discs. For example, the C-C composite components may be used as friction materials in other types of braking applications and vehicles.

In the example of FIG. 1, wheel and brake assembly 10 includes a wheel 12, an actuator assembly 14, a brake stack 58, and an axle 18. Wheel 12 includes wheel hub 20, wheel outrigger flange 22, bead seats 24A and 24B, lug bolt 26, and lug nut 28. Actuator assembly 14 includes actuator housing 30, actuator housing bolt 32, and ram 34. Brake stack 58 includes alternating rotor brake discs 36 and stator brake discs 38; rotor brake discs 36 are configured to move relative to stator brake discs 38. Rotor brake discs 36 are mounted to wheel 12, and in particular wheel hub 20, by beam keys 40. Stator brake discs 38 are mounted to axle 18, and in particular torque tube 42, by splines 44. Wheel and brake assembly 10 may support any variety of private, commercial, or military aircraft or other type of vehicle.

Wheel and brake assembly 10 includes wheel 12, which in the example of FIG. 1 is defined by a wheel hub 20 and a wheel outrigger flange 22. Wheel outrigger flange 22 may be mechanically affixed to wheel hub 20 by lug bolts 26 and lug nuts 28. Wheel 12 defines bead seals 24A and 24B. During assembly, an inflatable tire (not shown) may be placed over wheel hub 20 and secured on an opposite side by wheel outrigger flange 22. Thereafter, lug nuts 28 can be tightened on lug bolts 26, and the inflatable tire can be inflated with bead seals 24A and 24B providing a hermetic seal for the inflatable tire.

Wheel and brake assembly 10 may be mounted to a vehicle via torque tube 42 and axle 18. In the example of FIG. 1, torque tube 42 is affixed to axle 18 by a plurality of bolts 46. Torque tube 42 supports actuator assembly 14 and stator brake discs 38. Axle 18 may be mounted on a strut of a landing gear (not shown) or other suitable component of the vehicle to connect wheel and brake assembly 10 to the vehicle.

During operation of the vehicle, braking may be necessary from time to time, such as during landing and taxiing procedures of an aircraft. Wheel and brake assembly 10 is configured to provide a braking function to the vehicle via actuator assembly 14 and brake stack 58. Actuator assembly 14 includes actuator housing 30 and ram 34. Actuator assembly 14 may include different types of actuators such as one or more of, e.g., an electrical-mechanical actuator, a hydraulic actuator, a pneumatic actuator, or the like. During operation, ram 34 may extend away from actuator housing 30 to axially compress brake stack 58 against compression point 48 for braking.

Brake stack 58 includes alternating rotor brake discs 36 and stator brake discs 38. Rotor brake discs 36 are mounted to wheel hub 20 for common rotation by beam keys 40. Stator brake discs 38 are mounted to torque tube 42 by splines 44. In the example of FIG. 1, brake stack 58 includes four rotors and five stators. However, a different number of rotors and/or stators may be included in brake stack 58 in other examples.

Rotor brake discs 36 and stator brake discs 38 may provide opposing friction surfaces for braking an aircraft. As kinetic energy of a moving aircraft is transferred into thermal energy in brake stack 58, temperatures may rapidly increase in brake stack 58. As such, rotor brake discs 36 and stator brake discs 38 that form brake stack 58 may include robust, thermally stable materials capable of operating at very high temperatures.

In one example, rotor brake discs 36 and/or stator brake discs 38 are formed as a C-C composite in the form of an annulus that defines a set of opposing wear surfaces. The C-C composite may be fabricated using any suitable manufacturing technique or combination of techniques including, for example, infiltrating the fibrous preforms describe herein as the starting substrate with a carbon matrix material using vacuum pressure infiltration (VPI), resin transfer molding (RTM), chemical vapor infiltration (CVI), chemical vapor deposition (CVD), additive manufacturing, or the like.

As briefly noted, in some examples, rotor brake discs 36 and stator brake discs 38 may be mounted in wheel and brake assembly 10 by beam keys 40 and splines 44, respectively. In some examples, beam keys 40 may be circumferentially spaced about an inner portion of wheel hub 20. Beam keys 40 may, for example, be shaped with opposing ends (e.g., opposite sides of a rectangular) and may have one end mechanically affixed to an inner portion of wheel hub 20 and an opposite end mechanically affixed to an outer portion of wheel hub 20. Beam keys 40 may be integrally formed with wheel hub 20 or may be separate from and mechanically affixed to wheel hub 20, e.g., to provide a thermal barrier between rotor brake discs 36 and wheel hub 20. Toward that end, in different examples, wheel and brake assembly 10 may include a heat shield (not shown) that extends out radially and outwardly surrounds brake stack 58, e.g., to limit thermal transfer between brake stack 58 and wheel 12.

In some examples, splines 44 may be circumferentially spaced about an outer portion of torque tube 42. As such, stator brake discs 38 may include a plurality of radially inwardly disposed lug notches along an inner diameter of the brake disc configured to engage with splines 44. Similarly, rotor brake discs 36 may include a plurality of radially inwardly disposed lug notches along an outer diameter of the brake disc configured to engage with beam keys 40. As such rotor brake discs 36 will rotate with the motion of the wheel while stator brake discs 38 remain stationary allowing the friction surfaces of an adjacent stator brake disc 38 and rotor brake disc 36 to engage with one another to deaccelerate the rotation of wheel 12.

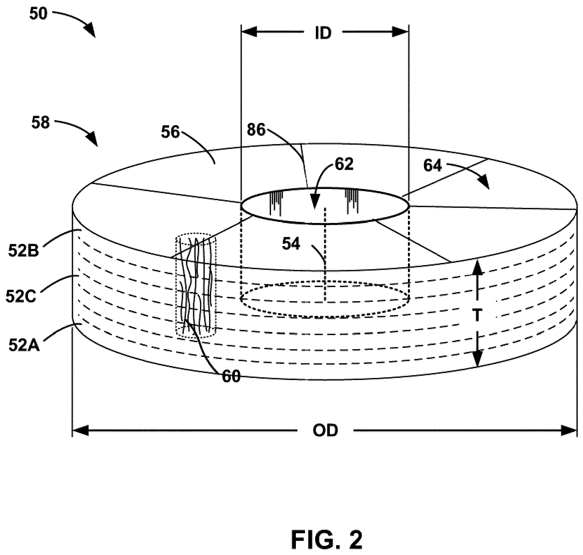

FIG. 2 is a schematic perspective view of an example fibrous preform 50 that may be used to manufacture a densified C-C composite such as rotor and stator brake discs 36 and 38. Fibrous preform 50 includes a plurality of fibrous layers 52, which includes a first exterior layer 52A, a second exterior layer 52B, and at least one interior layer 52C. Each fibrous layer 52 may include one or more fabric segments 56 made of carbon fibers or carbon-precursor fibers in the form of both web and tow fibers. Plurality of layers 52 may be superposed (e.g., stacked on one another) in the direction of central axis 54 to form a stack 58.

Fibrous preform 50 also includes a plurality of needled fibers 60 that at least partially extend through two of more of fibrous layers 52. In some examples, needled fibers 60 may extend substantially vertically (e.g., vertically or nearly vertically in the z-axis direction) through stack 58 (e.g., generally parallel to central axis 54). While the accompanying figures illustrate needled fibers 60 as generally parallel to central axis 54, in some examples, at least some of needled fibers 60 may not be parallel to central axis 54 and may take on other orientations in stack 58 including, for example, wavy, angled, curved, or the like.

As discussed further below, needled fibers 60 are introduced during the needle-punch process. In some examples, needled fibers 60 may be sourced by plurality of fibrous layers 52. For example, the needle-punch process may drive web fibers present within a respective fibrous layer 52 into adjacent fibrous layers 52 to mechanically intertwine and bind fibrous layers 52 together. Additionally, or alternatively, at least some of the described tow fibers within a respective fibrous layer 52 may be transformed into needled fibers 60 within fibrous preform 50 as a result of fibrous layers 52 being superposed and needle-punched together. For example, the needle-punch process may break some of the tow fibers contained in a respective fibrous layer 52 and at least partially transfer the broken fibers into one or more adjacent fibrous layers 52 within fibrous preform 50 to form needled fibers 60.

In some examples, fibrous preform 50 may be in the shape of an annulus or disc defining an outer preform diameter (OD). Fibrous preform 50 may also include a central aperture 62 that extends along central axis 54 through stack 58. Central aperture 62 may define an inner preform diameter (ID) of fibrous preform 50. In some examples the outer preform diameter (OD) of fibrous preform 50 may be about 14.5 inches (e.g., about 37 cm) to about 25 inches (e.g., about 64 cm). The inner preform diameter (ID) of fibrous preform 50 may be about 4.5 inches (e.g., about 12 cm) to about 15 inches (e.g., about 38 cm). In other examples, fibrous preform 50 may be a partial disc (e.g., crescent shaped) or include a different geometry.

As described further below, each fibrous layer 52 within fibrous preform 50 includes a combination of tow fibers and web fibers. Both tow and web fibers include carbon fibers, fibers configured to subsequently pyrolyze into carbon fibers (hereinafter "carbon-precursor fibers"), or combinations thereof. Carbon-precursor fibers may include, for example, polyacrylonitrile (PAN) fibers, oxidized polyacrylonitrile (O-PAN) fibers, rayon fibers, or the like. The tow fibers (also sometimes referred to as chordal fibers) represent relatively long or substantially continuous fibers that are bundled together to from a respective tow. In some examples, each respective tow may include hundreds to several thousand of individual fibers that have been unidirectionally aligned and bundled together to form the tow. Each fibrous layer 52 may include a plurality of tows, each comprising a plurality of tow fibers. The tows are unidirectionally aligned within a respective fabric segment that may be used to form all or part of a respective fibrous layer 52 such that the tow fibers within the fabric segment are all substantially aligned (e.g., aligned or nearly aligned). The web fibers include chopped, discontinuous, or staple carbon fibers or carbon-precursor fibers having an unspecified alignment that are relatively short in comparison to the tow fibers. Web fibers define a substantially random fiber orientation relative to one another and relative to the tow fibers.

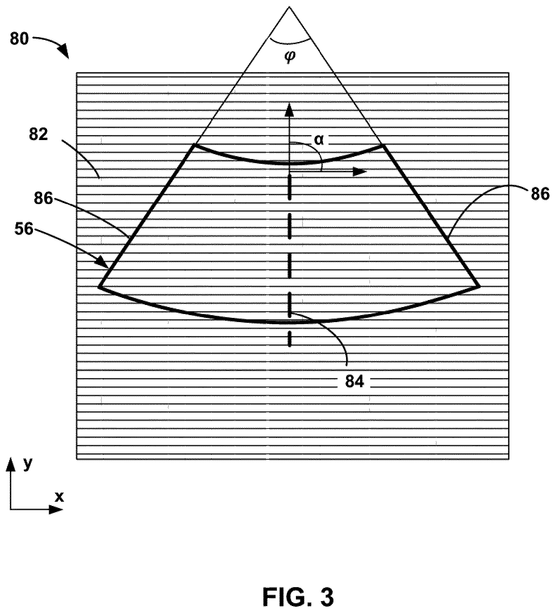

In some examples, prior to being incorporated into a respective fibrous layer 52 of fibrous preform 50, the tow and web fibers may be incorporated together to form a single layer of material, referred to as a duplex layer of a duplex fabric. FIG. 3 is a schematic view of an example duplex fabric 80 that may be used to form at least a portion of a respective fibrous layer 52. Duplex fabric 80 includes a plurality of unidirectionally aligned tow fibers 82, which are shown as being aligned in the x-axis direction of FIG. 3, that have been combined with web fibers (not shown).

In some examples, the formation of duplex fabric 80 may be accomplished by combining one or more layers of aligned tow fibers 82 with one or more layers of web fibers that are subsequently needle-punched into the layer of tow fibers 82 to form duplex fabric 80. For example, a layer of web fibers may be formed by crosslapping a carded web to achieve a desired areal weight and then needle-punching the layer to form the web layer. Additionally, or alternatively, the web layer may be formed by airlaying the web fibers on top of a layer of the aligned tow fibers 82. The layer of aligned tow fibers 82 may be formed by spreading large continuous tows using a creel, to form a sheet of the desired areal weight with tow fibers 82 being unidirectionally aligned in the same direction. Both the web layer and the layer of tow fibers 82 may be needle-punched together to force the relatively short web fibers to become intertwined with the tow fibers 82 to form duplex fabric 80. The intertwined web fibers may help mechanically bind tow fibers 82 together allowing duplex fabric 80 to be efficiently handled without having tow fibers 82 within the fabric layer separate or fall apart with subsequent processing. The resultant duplex fabric 80 may be more durable, retain its shape better, and be overall easier to further manufacture compared to a layer of only tow fibers 82 or only web fibers. Other techniques may also be used to form duplex fabric 80 that includes both tow fibers 82 and web fibers which may be known to those skilled in the art.

In some examples, in addition to holding a respective duplex fabric 80 together, the web fibers used to produce the duplex fabric 80 may ultimately be used to form or contribute to a portion of needled fibers 60 in fibrous preform 50 as a result of fibrous layers 52 being superposed and needle-punched together. Both the web fibers and tow fibers 82 may be formed of the same carbon fiber or carbon fiber precursor materials, may be formed of different carbon fiber or carbon fiber precursor materials, or may be formed of different combinations of carbon fiber and/or carbon fiber precursor materials.

In some examples, each fibrous layer 52 may be formed using one or more fabric segments 56, each being cut from a respective duplex fabric 80. In examples where each fibrous layer 52 is formed from a single fabric segment 56, the respective fabric segment 56 may be cut from duplex fabric 80 in the shape of an annulus and supposed on other fibrous layers 52.

In some examples, each fibrous layer (e.g., fibrous layer 52B) may include a plurality of fabric segments 56 that collectively make up the respective fibrous layer 52B. For example, fibrous preform 50 may be formed by sequentially adding abutting fabric segments 56 in the form of continuous helix about central axis 54. In such examples, each fibrous layer 52 may define a portion of the helix in terms of the number or revolutions about central axis 54. In some examples, each fibrous layer 52 may define about 0.9 to about 1.2 revolutions (e.g., about 325° to about 420°) of the helix. In examples where a respective fibrous layer 52 defines more than one full revolution of the helix, a portion of the respective fibrous layer 52 may overlap with itself. Despite the overlap, the respective fibrous layer 52 may still be characterized as a single fibrous layer 52 within fibrous preform 50.

In examples where each fibrous layer 52 includes a plurality of fabric segments 56, each fabric segment 56 may define an arcuate shape that is characterized in terms of its arc angle (*φ*) and its fiber orientation angle (α), which are illustrated in FIG. 3. The fiber orientation angle (α) represents the angle between the segment bisector 84 (e.g., a line which represents the center or bisecting line of the arcuate shape of fabric segment 56) of a respective fabric segment 56 and the direction in which tow fibers 82 are aligned. The fiber orientation angle (α) may be set to about 0° (e.g., radially aligned fibers), 90° (e.g., tangentially aligned fibers as shown in FIG. 3), or some intermediate angle.

The arc angle (*φ*) represents the angle between abutting edges 86 of a respective fabric segment 56 and indicates the degree of rotation that a respective fabric segment 56 will occupy within a respective fibrous layer 52. For example, an arc angle (*φ*) equal to 45° represents 1/8^{th} of a full revolution about central axis 54. In some examples, fabric segments 56 described herein may be define an arc angle (*φ*) such that, fabric segments 56 forming a single fibrous layer 52A of fibrous preform 50 complete a single full revolution. For example, if a total of six arcuate fabric segments 56 are used to define one complete fibrous layer 52A, each fabric segment 56 may define an arc angle (*φ*) of 60° so that the six fabric segments 56 when aligned with abutting edges 86 (e.g., the edges defining arc angle (*φ*)) in contact with the abutting edges of adjacent fabric segments 56 will complete one full revolution with each fabric segment occupying 1/6^{th} of the respective fibrous layer 56A.

In some examples, fabric segments 56 described herein may define arc angles (*φ*) that do not add up to 360° (i.e., do not add up to one complete revolution) within a respective fibrous layer 52A. For example, fabric segments 56 may be sized so that the plurality of fabric segments 56 within a respective fibrous layer 52A complete more or less than one full rotation within the layer. In some examples, each fabric segment 56 may define arc angle (*φ*) of about 65° to about 70° (e.g., about 68°), however, other arc angles (*φ*) may be used if desired. In some examples where the respective fabric segments 56 each define an arc angle (*φ*) of about 65° to about 70°, the respective fibrous layer 52A may complete about 1.08 to about 1.17 revolutions within the helix arrangement with a small portion of the layer overlapping itself. Setting the arc angle (*φ*) at about 65° to about 70° (e.g., about 68°) may help to minimize the butt joint overlap of abutting edges 86 between adjacent fibrous layers 52 within the final constructed fibrous preform 50. Additionally, or alternatively, having the arc angle (*φ*) set at about 65° to about 70° (e.g., about 68°) for fabric segments 56 may help to create more uniform alignment of tow fibers 82 within fibrous preform 50 compared to larger arc angles (*φ*)*.*

While some of the figures described herein show a relatively small number of layers used form the respective fibrous preforms, the preforms (e.g., fibrous preform 50) produced as a result of the techniques describe herein may include any suitable number of fibrous layers 52 (e.g., 30 or more layers) to produce the desired thickness (T) of the resultant preform.

Within the field of C-C composite disc brakes, important performance characteristics of the disc brake (e.g., rotor and stator disc brakes 36 and 38) may include, for example, the ability of the disc brake to transfer heat generated at the friction surfaces away from such surfaces, the heat capacity of the disc brake (e.g., the ability of the disc brake to absorb heat or accommodate the elevated temperatures during braking), the compressive, bending, and shear strength of the disc brake, or the like. In some examples, select properties of the resultant C-C composite disc brake may be increased by altering the underlying fiber architecture of fibrous preform 50. For example, to improve heat transfer along central axis 54, the number of needled fibers 60 or "z-axis" fibers within fibrous preform 50 may be increased. To improve the general heat capacity of the disc brake, the amount of carbon matrix material (e.g., densified carbon material) infiltrated within fibrous preform 50 may be increased. The carbon matrix material (e.g., carbon deposited via CVI/CVD) is denser that the carbon material of the carbon fibers and therefore has a better ability to absorb the heat generated during breaking compared to the carbon fibers.

In some examples, the fiber architecture needed to improve such desired properties of the C-C composite disc brake are often in conflict with each other. For example, to improve the heat transfer along central axis 54, fibrous preform 60 may be needle-punched more to increase the number needled fibers 60 or z-axis fibers introduced into the preform. However, the amount or duration of the needling performed on fibrous preform 60 may compress the respective fibrous layers 52 leaving less room between the fibers for the inclusion of carbon matrix material, thereby reducing the amount of carbon matrix material that may be added to fibrous preform 50 and reducing the heat capacity properties of the resultant C-C composite.

In some examples, fibrous layers 52 of fibrous preform 50 may be individually tailored to improve one or more performance properties of the final C-C composite. In some examples, for reasons described further below, the fibrous layers 52 may be individually tailored by adjusting the ratio of web fibers to tow fibers 82 within the respective fibrous layers 52, the thicknesses of the respective fibrous layers 52, the areal weight of the respective fibrous layers 52, or combinations thereof to modify the performance properties of the individual fibrous layers 52 depending on the location of the respective fibrous layer 52 within stack 58.

In some examples, fibrous layers 52 may be tailored by increasing the ratio of web fibers to tow fibers 82 within fibrous layers 52 closer to the exterior of fibrous preform 52 (e.g., exterior layers 52A and 52B) compared to interior layers (e.g., interior layer 52C). Increasing the ratio of web fibers within a respective fibrous layer 52 increases the number of available fibers that may be converted into needled fibers 60 or otherwise arranged as z-axis fibers within fibrous preform 50. In some examples, having a higher ratio of web fibers near exterior layers 52A and 52B may be useful for increasing the number of needled fibers 60 or z-axis fibers present along the friction surfaces of the resultant C-C composite disc brake in order to help transfer heat away from the friction surfaces of the resultant C-C composite disc brake into the interior region of the disc brake (e.g., towards interior layer 52C). Additionally, or alternatively, increasing the number of needled fibers 60 or z-axis fibers present along the friction surfaces of fibrous preform 50 may increase the shear strength of exterior layers 52A and 52B where such shear forces will be highest during braking procedures.

Furthermore, by having a lower ratio of web fibers present within interior layers 52C may reduce the degree of compression within interior layers 52C that occurs by the needle-punch process and introduction of needled fibers 60 or z-axis fibers. The relatively reduced compression within the interior layers 52C may permit a more porous structure and allow for a greater accumulation of the carbon matrix material, which is added during subsequent densification cycles. The increased presence of carbon matrix material may in turn increase the overall heat capacity of the resultant C-C composite disc brake.

Additionally, or alternatively, the increased the ratio of tow fibers 48 present within the interior layers 52C may permit better heat transfer radially within the C-C composite towards the inner or outer diameter where the absorbed heat may be dissipated into the surrounding components of wheel and brake assembly 10. Tow fibers 48 present within a respective layer 52 may also impart better bending strength or bending resistance (e.g., bending with the x-y plane) to the resultant C-C composite with may be more critical in the interior layers 52C than exterior layers 52A and 52B.

In some examples, each fibrous layer 52 may define a web fiber to tow fiber 82 ratio is about 1:100 to about 1:1. In some examples, one or more of interior layers 52C may define a web fiber to tow fiber 82 ratio of about 1:100 to about 1:2 (e.g., about 1:100 to about 1:5) and exterior layers 52A and 52B may define a web fiber to tow fiber 82 ratio of about 1:5 to about 1:1 (e.g., 1:4 to about 1:1).

Additionally, or alternatively, fibrous layers 52 may be tailored by decreasing the relative thickness (e.g., thickness in the direction of central axis 54) within exterior layers 52A and 52B of fibrous preform 50 compared to the center or interior layers 52C. Decreasing the thickness within a respective fibrous layer 52 may increase the amount of overall needling that occurs within the respective fibrous layer 52. For example, in a conventional needle-punch process, a needling board or loom may include a plurality of needles that include barbs which engage with web fibers during the needling process and drive those fibers into adjacent fibrous layers 52. The needling process may be performed with each application of a new fibrous layer 52, or a set number or number fraction of fibrous layers 52. In some examples, the needling board or loom may define a penetration depth that remains relatively constant during the entire needling process. In such examples, the total number of layers penetrated by the needling board or loom may depend on the relative thickness of the respective fibrous layers 52. If a respective fibrous layer or collection of layers define a relatively low thickness, the total number layers needed to define a total thickness (T) will be relatively high and may require the occurrence of additional needling to bind the layers together. Additionally, as the penetration depth of the needles will pass through more fibrous layers 52 within a given needle stroke more needling will occur within a respective fibrous layer 52. In contrast, if the fibrous layers are relatively thick, the amount of overall needling that occurs may be less and the number of layers penetrated per needle stroke will be decreased. The relative increase or decrease of the occurrence of needling within a respective fibrous layer 52 may correspond to an increase or decrease respectively of the presence of needle fibers 60 or z-axis fibers present within the respective layer.

In some examples, by forming fibrous preform 50 to include relatively thick fibrous layers 52 toward the center of the preform (e.g., interior layer 52C) and relatively thin fibrous layers 52 towards the exterior of the preform (e.g., exterior fibrous layers 52A and 52B and/or interior layers nearer exterior fibrous layers 52A and 52B), more needling may occur within the thinner exterior layers than within the thicker interior layers, thereby increasing the comparative number of needled fibers 60 or z-axis fibers generated within the exterior fibrous layers 52 of fibrous preform 50. Having an increased presence of needled fibers 60 or z-axis fibers within the exterior layers (e.g., exterior layers 52A and 52B) of fibrous preform 50 may impart one or more of the performance properties described above into the resultant C-C composite.

In some examples, each fibrous layer 52 may have a pre-needled or fabric thickness (e.g., before being needled as a layer into fibrous preform 50) as measured in a direction parallel (e.g., parallel or nearly parallel) to central axis 54 of about 1 millimeter (mm) to about 4 mm. In some examples, one or more of interior layers 52C may define a pre-needled or fabric thickness of about 0.5 mm to about 2 mm (e.g., about 1 mm to about 2 mm) and exterior layers 52A and 52B may define a pre-needled or fabric thickness of about 1 mm to about 4 mm (e.g., about 2 mm to about 4 mm). The total thickness (T) of fibrous preform 50 when complete may be about 1 inch to about 3 inches (e.g., about 2.5 centimeters (cm) to about 7.6 cm), which may be reduced further during subsequent carbonization/pyrolyzation processes.

Additionally, or alternatively, fibrous layers 52 may be tailored by decreasing the areal weight (e.g., weight of fibers per unit area) of the fibers (e.g., tow fibers 82 and web fibers) within exterior layers 52A and 52B of fibrous preform 50 compared to the center or interior layers 52C. Increasing the areal weight of fibrous layers 52 using high areal weight fabric segments 56 may require less needling to join the respective fibrous layers 52. By decreasing the areal weight of fibrous layers 52 towards the exterior of fibrous preform 50 (e.g., exterior fibrous layers 52A and 52B and/or interior layers nearer exterior fibrous layers 52A and 52B) compared to fibrous layers 52 near the center of fibrous preform 50 (e.g., interior layer 52C), more needling may occur within the lower areal weight fibrous layers 52 near the exterior, thereby increasing the comparative number of needled fibers 60 or z-axis fibers generated within the respective fibrous layer 52 and/or reducing the compression that occurs within interior layers 52C. Having an increased presence of needled fibers 60 or z-axis fibers within the exterior layers (e.g., exterior layers 52A and 52B) of fibrous preform 50 may impart one or more of the performance properties described above into the resultant C-C composite.

In some examples, the duplex fabric 80 used to from fabric segments 56 and fibrous layers 52, may have an areal weight of about 1250 and about 3000 grams per square meter (g/m²). In some examples, one or more of interior layers 52C may be formed of fabric segments that define an areal weight of about 1500 g/m² to about 3000 g/m² and exterior layers 52A and 52B may be formed of fabric segments that define an areal weight of about 1000 g/m² to about 2000 g/m² (e.g., about 1250 g/m² to about 2000 g/m²).

Once fibrous preform 50 has been fully formed to a desired thickness (T), the preform may be subjected to one or more pyrolyzation and densification cycles. For example, fibrous preform 50 may be initially pyrolyzed (e.g., carbonized) to convert any carbon-precursor materials into carbon. After pyrolyzation, the web fibers and tow fibers 82 become carbon fibers if not already. Fibrous preform 50 may then be subjected to one or more densification cycles such as chemical vapor deposition/chemical vapor infiltration (CVD/CVI), vacuum/pressure infiltration (VPI), or resin transfer molding (RTM), followed by subsequent pyrolyzation or heat treatment cycles to infiltrate fibrous preform 50 with carbon matrix material to produce a C-C composite.

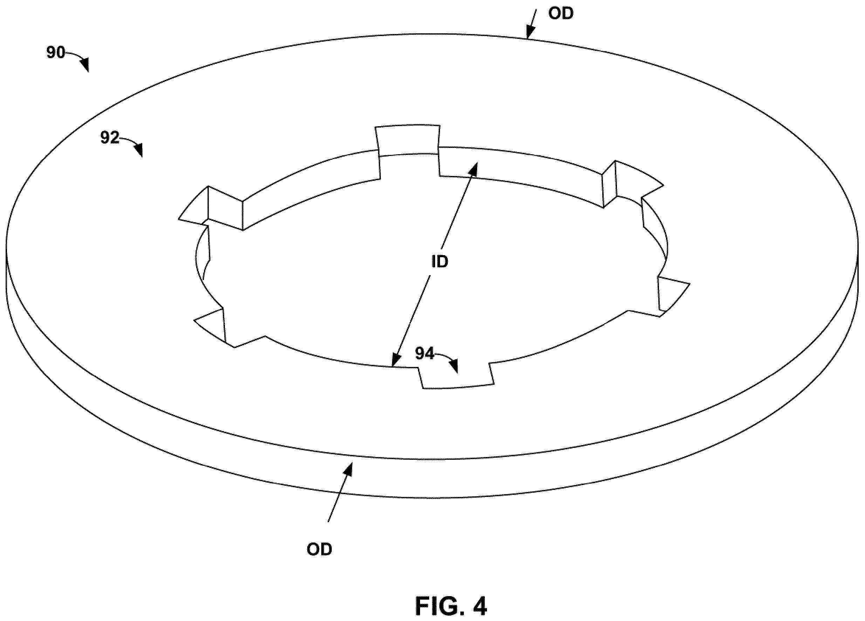

FIG. 4 is a perspective view of an example C-C composite 90 in the shape of a disc brake (e.g., stator disc brake 38). C-C composite 90 may include fibrous preform 50, post pyrolyzation (if needed) to substantially covert web fibers and tow fibers 82 to carbon fibers, followed by densification and any optional heat treatment to incorporate carbon matrix material into the pores within fibrous preform 50. C-C composite 90 may include a plurality of fibrous layers (e.g., fibrous layers 52) having similar fiber architecture to those described above with respect to fibrous preform 50. In some examples, the number of z-axis fibers (e.g., needled fibers 60) an exterior fibrous layer 92 (e.g., first or second exterior layers 52A and 52B) of C-C composite 90 may be greater than the number of z-axis fibers in a center layer (e.g., interior layer 52C) of C-C composite 90. Additionally, or alternatively, the amount of the carbon matrix material in exterior fibrous layer 92 of C-C composite 90 may be less than amount of the carbon matrix material in the center layer.

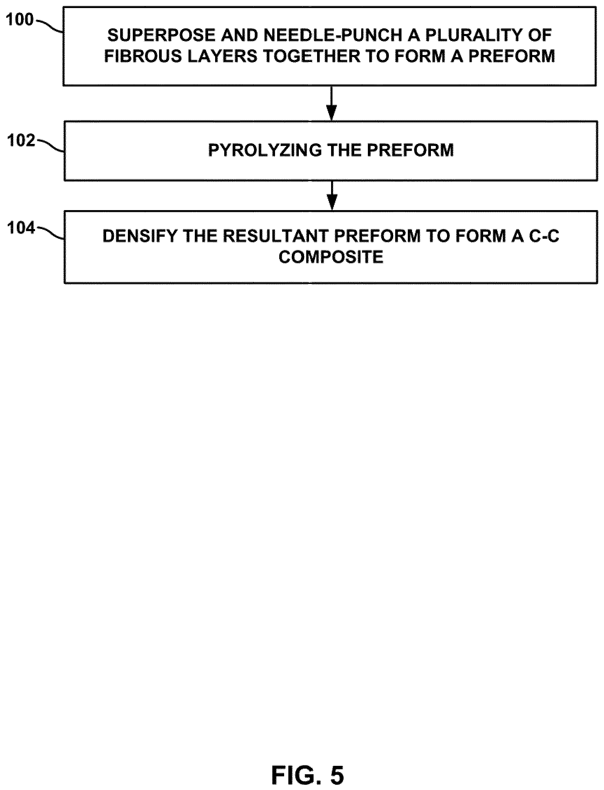

The fibrous preforms and C-C composites described herein may be formed using any suitable technique. FIG. 5 is a flow diagram illustrating an example technique of manufacturing fibrous preform 50 and C-C composite 90. For ease of illustration, the example method of FIG. 5 is described primarily with respect to fibrous preform 50 of FIG. 2; however, other fibrous preforms may be formed using the described techniques and fibrous preform 50 or C-C composite 90 may be made using other techniques.

The example technique of FIG. 5 includes superposing and needle-punching a plurality of fibrous layers 52 together to form fibrous preform 50 (100); pyrolyzing fibrous preform 50 (102); and densifying the resultant preform 50 to form C-C composite 90 (104).

As described above, each fibrous layer 52 may include a respective plurality of web fibers and tow fibers 82 that define a respective web fiber to tow fiber ratio, an areal weight, and a pre-needled thickness for the respective fibrous layer 52. In some examples, each fibrous layer 52 may be constructed using a respective plurality of duplex fabric segments 56. For example, duplex fabric segments 56 may be aligned and stacked in a helical arrangement. In such examples, each fibrous layer 52 may complete about 0.9 to about 1.2 revolutions of the helix with fibrous layers 52 being superposed (e.g., stacked) on one another relative to central axis 54 to form stack 58. Each fabric segments 56 may each define an arc angle (α) fiber orientation angles (*φ*) as described above and may be selected or modified to obtain the desired web to tow fiber ratio, areal weight, and/or pre-needled/fabric thickness for a respective fibrous layer 52.

Each fabric segment 56 may be needle-punched after being added to fibrous preform 50. In some examples, a respective fabric segment 56 may be needled into preform 50 on a layer-by-layer basis. Additionally, or alternatively, more than one fibrous layers 52 maybe be added to preform 50 and then the collective superposed layers 52 may be needle-punched at the same time to incorporate the layers into fibrous preform 50. The entire process may then continue until the desired preform thickness (T) is obtained.

Once fibrous preform 50 has been formed, fibrous preform 50 may be pyrolyzed (102) to convert any carbon-precursor material into carbon through a thermal degradation process to effectively burn off any non-carbon material. For example, fibrous preform 50 may be carbonized by heating fibrous preform 50 in a retort under inert or reducing conditions to remove the non-carbon constituents (hydrogen, nitrogen, oxygen, etc.) from the fibers. The carbonization can be carried out using retort, such as an autoclave, a furnace, a hot isostatic press, a uniaxial hot press, or the like. In each of these techniques, fibrous preform 50 may be heated in the inert atmosphere at a temperature in the range of about 600° C to about 1000° C while optionally being mechanically compressed. The mechanical compression may be used to define the geometry (e.g., thickness (T)) of fibrous preform 50. In some examples, the retort may be purged gently with nitrogen for approximately 1 hour, then slowly heated to about 900 °C over the course of approximately 10-20 hours, followed by elevating the temperature to about 1050 °C over approximately 1-2 hours. The retort then may be held at about 1050 °C for approximately 3-6 hours before the carbonized preform is allowed to cool overnight. In some examples, the carbonization step can be carried out at even higher temperature, including up to about 1800 °C.

After carbonization, fibrous preform 50 may be subjected to one or more densification cycles to form C-C composite 90 (104). Example densification cycles may include, for example, being densified by applying one or more cycles of CVI/CVD of a carbonaceous gas. Any suitable carbonaceous gas may be used during the CVI/CVD processing including, for example, carbon-based gases such as natural gas, methane, ethane, propane, butane, propylene, or acetylene, or a combination of at least two of these gases. In some examples, the application of the carbonaceous gas to densify a fibrous preform 50 via CVI/CVD may occur substantially in a vacuum space (e.g., a vessel with an internal environment at less than 100 Torr) or under an inert gas environment so as to control the chemical deposition reaction to produce the carbon matrix material. In some examples, during application of the CVI/CVD gas, the environment including fibrous preform 50 may be heated to an elevated temperature, for example about 900 °C to about 1200 °C, to promote the chemical deposition reaction.

In other examples, fibrous preform 50 may be densified (104) using other suitable techniques including for example, resin infiltration and carbonization via resin transfer mold (RTM) processing, vacuum pressure infiltration (VPI) processing, high pressure infiltration (HPI), or the like. In some examples, the densification step (104) may produce a densified C-C composite 90 having a final density of about 1.65 to about 1.95 g/cc.

In some examples, during or after the densification of fibrous preform 50, the major friction surfaces of the resultant C-C composite may be sculpted into a desired shape, such as a final brake disc shape. For example, C-C composite 90 may be ground in the shape of a densified C-C composite disc brake having a final thickness T (e.g., about 1.4 inches). Additionally, or alternatively, lug notches 94 may be formed along the inner or outer diameters at this time.

Various examples have been described. These and other examples are within the scope of the following claims.

## Claims

1. A preform for a carbon-carbon composite, the preform comprising:
a plurality of fibrous layers superposed and needled-punched together, each fibrous layer of the plurality of fibrous layers comprising:
web fibers, wherein the web fibers comprise at least one of carbon fibers or carbon-precursor fibers; and
tow fibers, wherein the tow fibers comprise at least one of carbon fibers or carbon-precursor fibers;
wherein the tow fibers are fibers which are continuous or relatively long in comparison to the web fibers and which are unidirectionally aligned and bundled together to form one or more tows; and
wherein the at least one carbon fibers or carbon-precursor fibers of the web fibers comprise at least one of chopped fibers, discontinuous fibers or staple fibers, and the web fibers have a random fiber orientation relative to one another and relative to the tow fibers and are relatively short in comparison to the tow fibers;
wherein the plurality of fibrous layers comprises:
a first fibrous layer;
a second fibrous layer; and
a third fibrous layer positioned between the first fibrous layer and the second fibrous layer, wherein the third fibrous layer comprises at least one of:
an areal weight that is greater than an areal weight of the first fibrous layer; or
a pre-needled thickness in a direction of a central axis of the preform that is greater than a pre-needled thickness of the first fibrous layer in a direction of a central axis of the preform.

2. The preform of claim 1, wherein the third fibrous layer comprises at least one of:
the areal weight being greater than an areal weight of the second fibrous layer; or
the pre-needled thickness in a direction of a central axis of the preform being greater than a pre-needled thickness of the second fibrous layer in a direction of a central axis of the preform.

3. The preform of claim 2, wherein the first fibrous layer and the second fibrous layer each comprise substantially a same ratio of web fibers to tow fibers, substantially a same areal weight; and substantially a same pre-needled thickness in a direction of a central axis of the preform.

4. The preform of any of claims 1-3, wherein each fibrous layer of the plurality of fibrous layers comprises a respective plurality of duplex fabric segments, wherein each duplex fabric segment comprises a respective plurality of the web fibers and a respective plurality of the tow fibers.

5. The preform of claim 4, wherein each duplex fabric segments of the respective plurality of duplex fabric segments defines an arc angle of about 65 degrees to about 70 degrees and a tow fiber orientation angle of about 0 degrees to about 90 degrees.

6. The preform of claim 1, wherein the areal weight of the third fibrous layer is greater than the areal weight of the first fibrous layer, and wherein the areal weight of the third fibrous layer is about 1500 grams per square meters (g/m²) to about 3000 g/m² and the areal weight of the first fibrous layer is about 1000 g/m² to about 2000 g/m².

7. A method comprising superposing and needle-punching a plurality of fibrous layers together to form a preform for a carbon-carbon composite, wherein each fibrous layer of the plurality of fibrous layers comprises:
web fibers, wherein the web fibers comprise at least one of carbon fibers or carbon-precursor fibers; and
tow fibers, wherein the tow fibers comprise at least one of carbon fibers or carbon-precursor fibers;
wherein the tow fibers are fibers which are continuous or relatively long in comparison to the web fibers and which are unidirectionally aligned and bundled together to form one or more tows; and
wherein the at least one carbon fibers or carbon-precursor fibers of the web fibers comprise at least one of chopped fibers, discontinuous fibers or staple fibers, and the web fibers have a random fiber orientation relative to one another and relative to the two fibers and are relatively short in comparison to the tow fibers;
wherein the plurality of fibrous layers comprises:
a first fibrous layer;
a second fibrous layer; and
a third fibrous layer positioned between the first fibrous layer and the second fibrous layer, wherein the third fibrous layer comprises at least one of:
an areal weight that is greater than an areal weight of the first fibrous layer; or
a pre-needled thickness in a direction of a central axis of the preform that is greater than a pre-needled thickness of the first fibrous layer in a direction of a central axis of the preform.

8. The method of claim **7,** wherein each fibrous layer of the plurality of fibrous layers comprises a respective plurality of duplex fabric segments, wherein each duplex fabric segment comprises a respective plurality of the web fibers and a respective plurality of the tow fibers, and wherein needle-punching the plurality of fibrous layers together comprises superposing the plurality of duplex fabric segments to form a helix, wherein each fibrous layer of the plurality of fibrous layers completes about 0.9 to about 1.2 revolutions of the helix.

9. A carbon-carbon composite comprising:
a carbon matrix material; and
a plurality of fibrous layers superposed and needled-punched together, each fibrous layer of the plurality of fibrous layers comprising:
web fibers, wherein the web fibers comprise carbon fibers; and
tow fibers, wherein the tow fibers comprise carbon fibers;
wherein the tow fibers are fibers which are substantially continuous or relatively long in comparison to the web fibers and which are unidirectionally aligned and bundled together to form one or more tows; and
wherein the carbon fibers of the web fibers comprise at least one of chopped fibers, discontinuous fibers or staple fibers, and the web fibers have a random fiber orientation relative to one another and relative to the two fibers and are relatively short in comparison to the tow fibers;
wherein the plurality of fibrous layers comprises:
a first fibrous layer;
a second fibrous layer; and
a third fibrous layer positioned between the first fibrous layer and the second fibrous layer, wherein the third fibrous layer comprises at least one of:
an areal weight that is greater than an areal weight of the first fibrous layer; or
a pre-needled thickness in a direction of a central axis of the preform that is greater than a pre-needled thickness of the first fibrous layer in a direction of a central axis of the preform.

## Patentansprüche

1. Vorform für einen Kohlenstoff-Kohlenstoff-Verbundwerkstoff, die Vorform umfassend:
eine Vielzahl von Faserschichten, die überlagert und miteinander vernadelt sind, jede Faserschicht der Vielzahl von Faserschichten umfassend:
Webfasern, wobei die Webfasern mindestens eines von Kohlenstofffasern oder Kohlenstoffvorläuferfasern umfassen; und
Bündelfasern, wobei die Bündelfasern mindestens eines von Kohlenstofffasern oder Kohlenstoffvorläuferfasern umfassen;
wobei die Bündelfasern Fasern sind, die kontinuierlich und im Vergleich zu den Webfasern relativ lang sind, und die unidirektional ausgerichtet und zusammen gebündelt sind, um ein oder mehrere Bündel auszubilden; und
wobei die mindestens eine Kohlenstofffaser oder Kohlenstoffvorläuferfaser der Webfasern mindestens eines von geschnittenen Fasern, diskontinuierlichen Fasern oder Spinnfasern umfasst, und die Webfasern eine zufällige Faserorientierung relativ zueinander und relativ zu den Bündelfasern aufweisen und im Vergleich zu den Bündelfasern relativ kurz sind;
wobei die Vielzahl von Faserschichten Folgendes umfasst:
eine erste Faserschicht;
eine zweite Faserschicht; und
eine zwischen der ersten Faserschicht und der zweiten Faserschicht positionierte dritte Faserschicht, wobei die dritte Faserschicht mindestens eines von Folgendem umfasst:
ein Flächengewicht, das größer ist als ein Flächengewicht der ersten Faserschicht; oder
eine vorgenadelte Dicke in einer Richtung einer Mittelachse der Vorform, die größer ist als eine vorgenadelte Dicke der ersten Faserschicht in einer Richtung einer Mittelachse der Vorform.

2. Vorform nach Anspruch 1, wobei die dritte Faserschicht mindestens eines von Folgendem umfasst:
ein Flächengewicht, das größer ist als ein Flächengewicht der zweiten Faserschicht; oder
eine vorgenadelte Dicke in einer Richtung einer Mittelachse der Vorform, die größer ist als eine vorgenadelte Dicke der zweiten Faserschicht in einer Richtung einer Mittelachse der Vorform.

3. Vorform nach Anspruch 2, wobei die erste Faserschicht und die zweite Faserschicht jeweils im Wesentlichen ein gleiches Verhältnis von Webfasern zu Bündelfasern, im Wesentlichen ein gleiches Flächengewicht und im Wesentlichen eine gleiche vorgenadelte Dicke in einer Richtung einer Mittelachse der Vorform umfassen.

4. Vorform nach einem der Ansprüche 1 bis 3, wobei jede Faserschicht der Vielzahl von Faserschichten eine jeweilige Vielzahl von Duplexgewebesegmenten umfasst, wobei jedes Duplexgewebesegment eine jeweilige Vielzahl der Webfasern und eine jeweilige Vielzahl der Bündelfasern umfasst.

5. Vorform nach Anspruch 4, wobei jedes der Duplexgewebesegmente der jeweiligen Vielzahl von Duplexgewebesegmenten einen Bogenwinkel von etwa 65 Grad bis etwa 70 Grad und einen Bündelfaserorientierungswinkel von etwa 0 Grad bis etwa 90 Grad definiert.

6. Vorform nach Anspruch 1, wobei das Flächengewicht der dritten Faserschicht größer ist als das Flächengewicht der ersten Faserschicht und wobei das Flächengewicht der dritten Faserschicht etwa 1500 Gramm pro Quadratmeter (g/m²) bis etwa 3000 g/m² beträgt und das Flächengewicht der ersten Faserschicht etwa 1000 g/m² bis etwa 2000 g/m² beträgt.

7. Verfahren, umfassend Überlagern und miteinander Vernadeln einer Vielzahl von Faserschichten, um eine Vorform für einen Kohlenstoff-Kohlenstoff-Verbundwerkstoff auszubilden, wobei jede Faserschicht der Vielzahl von Faserschichten Folgendes umfasst:
Webfasern, wobei die Webfasern mindestens eines von Kohlenstofffasern oder Kohlenstoffvorläuferfasern umfassen; und
Bündelfasern, wobei die Bündelfasern mindestens eines von Kohlenstofffasern oder Kohlenstoffvorläuferfasern umfassen;
wobei die Bündelfasern Fasern sind, die kontinuierlich und im Vergleich zu den Webfasern relativ lang sind, und die unidirektional ausgerichtet und zusammen gebündelt sind, um ein oder mehrere Bündel auszubilden; und
wobei die mindestens eine Kohlenstofffaser oder Kohlenstoffvorläuferfaser der Webfasern mindestens eines von geschnittenen Fasern, diskontinuierlichen Fasern oder Spinnfasern umfasst, und die Webfasern eine zufällige Faserorientierung relativ zueinander und relativ zu den Bündelfasern aufweisen und im Vergleich zu den Bündelfasern relativ kurz sind;
wobei die Vielzahl von Faserschichten Folgendes umfasst:
eine erste Faserschicht;
eine zweite Faserschicht; und
eine zwischen der ersten Faserschicht und der zweiten Faserschicht positionierte dritte Faserschicht, wobei die dritte Faserschicht mindestens eines von Folgendem umfasst:
ein Flächengewicht, das größer ist als ein Flächengewicht der ersten Faserschicht; oder
eine vorgenadelte Dicke in einer Richtung einer Mittelachse der Vorform, die größer ist als eine vorgenadelte Dicke der ersten Faserschicht in einer Richtung einer Mittelachse der Vorform.

8. Verfahren nach Anspruch 7, wobei jede Faserschicht der Vielzahl von Faserschichten eine jeweilige Vielzahl von Duplexgewebesegmenten umfasst, wobei jedes Duplexgewebesegment eine jeweilige Vielzahl der Webfasern und eine jeweilige Vielzahl der Bündelfasern umfasst, und wobei das miteinander Vernadeln der Vielzahl von Faserschichten das Überlagern der Vielzahl von Duplexgewebesegmenten dazu umfasst, eine Wendel auszubilden, wobei jede Faserschicht der Vielzahl von Faserschichten etwa 0,9 bis etwa 1,2 Umdrehungen der Wendel fertigstellt.

9. Kohlenstoff-Kohlenstoff-Verbundwerkstoff, umfassend:
ein Kohlenstoffmatrixmaterial; und
eine Vielzahl von Faserschichten, die überlagert und miteinander vernadelt sind, jede Faserschicht der Vielzahl von Faserschichten umfassend:
Webfasern, wobei die Webfasern Kohlenstofffasern umfassen; und
Bündelfasern, wobei die Bündelfasern Kohlenstofffasern umfassen;
wobei die Bündelfasern Fasern sind, die im Wesentlichen kontinuierlich und im Vergleich zu den Webfasern relativ lang sind, und die unidirektional ausgerichtet und zusammen gebündelt sind, um ein oder mehrere Bündel auszubilden; und
wobei die Kohlenstofffasern der Webfasern mindestens eines von geschnittenen Fasern, diskontinuierlichen Fasern oder Spinnfasern umfasst, und die Webfasern eine zufällige Faserorientierung relativ zueinander und relativ zu den Bündelfasern aufweisen und im Vergleich zu den Bündelfasern relativ kurz sind;
wobei die Vielzahl von Faserschichten Folgendes umfasst:
eine erste Faserschicht;
eine zweite Faserschicht; und
eine zwischen der ersten Faserschicht und der zweiten Faserschicht positionierte dritte Faserschicht, wobei die dritte Faserschicht mindestens eines von Folgendem umfasst:
ein Flächengewicht, das größer ist als ein Flächengewicht der ersten Faserschicht; oder
eine vorgenadelte Dicke in einer Richtung einer Mittelachse der Vorform, die größer ist als eine vorgenadelte Dicke der ersten Faserschicht in einer Richtung einer Mittelachse der Vorform.

## Revendications

1. Préforme pour un composite carbone-carbone, la préforme comprenant :
une pluralité de couches fibreuses superposées et aiguilletées ensemble, chaque couche fibreuse de la pluralité de couches fibreuses comprenant :
des fibres de nappe, dans laquelle les fibres de nappe comprennent au moins l'une parmi fibres de carbone ou fibres de précurseur de carbone ; et
des fibres de mèche, dans laquelle les fibres de mèche comprennent au moins l'une parmi fibres de carbone ou fibres de précurseur de carbone ;
dans laquelle les fibres de mèche sont des fibres qui sont continues ou relativement longues en comparaison aux fibres de nappe et qui sont alignées dans une seule direction et regroupées ensemble pour former une ou plusieurs mèches ; et
dans laquelle les au moins une fibres de carbone ou fibres de précurseur de carbone des fibres de nappe comprennent au moins l'une parmi fibres coupées, fibres discontinues ou fibres courtes, et les fibres de nappe ont une orientation de fibre aléatoire les unes par rapport aux autres et par rapport aux fibres de mèche et sont relativement courtes en comparaison aux fibres de mèche ;
dans laquelle la pluralité de couches fibreuses comprend :
une première couche fibreuse ;
une deuxième couche fibreuse ; et
une troisième couche fibreuse positionnée entre la première couche fibreuse et la deuxième couche fibreuse, dans laquelle la troisième couche fibreuse comprend au moins l'une parmi :
une masse surfacique qui est supérieure à une masse surfacique de la première couche fibreuse ; ou
une épaisseur avant aiguilletage dans une direction d'un axe central de la préforme qui est supérieure à une épaisseur avant aiguilletage de la première couche fibreuse dans une direction d'un axe central de la préforme.

2. Préforme selon la revendication 1, dans laquelle la troisième couche fibreuse comprend au moins l'une parmi :
la masse surfacique étant supérieure à une masse surfacique de la deuxième couche fibreuse ; ou
l'épaisseur avant aiguilletage dans une direction d'un axe central de la préforme étant supérieure à une épaisseur avant aiguilletage de la deuxième couche fibreuse dans une direction d'un axe central de la préforme.

3. Préforme selon la revendication 2, dans laquelle la première couche fibreuse et la deuxième couche fibreuse comprennent chacune un rapport sensiblement identique entre les fibres de nappe et les fibres de mèche, une masse surfacique sensiblement identique ; et une épaisseur avant aiguilletage sensiblement identique dans une direction d'un axe central de la préforme.

4. Préforme selon l'une quelconque des revendications 1 à 3, dans laquelle chaque couche fibreuse de la pluralité de couches fibreuses comprend une pluralité respective de segments de tissu duplex, dans laquelle chaque segment de tissu duplex comprend une pluralité respective des fibres de nappe et une pluralité respective des fibres de mèche.

5. Préforme selon la revendication 4, dans laquelle chaque segment de tissu duplex de la pluralité respective de segments de tissu duplex définit un angle d'arc d'environ 65 degrés à environ 70 degrés et un angle d'orientation de fibre de mèche d'environ 0 degré à environ 90 degrés.

6. Préforme selon la revendication 1, dans laquelle la masse surfacique de la troisième couche fibreuse est supérieure à la masse surfacique de la première couche fibreuse, et dans laquelle la masse surfacique de la troisième couche fibreuse est d'environ 1500 grammes par mètre carré (g/m²) à environ 3000 g/m² et la masse surfacique de la première couche fibreuse est d'environ 1000 g/m² à environ 2000 g/m².

7. Procédé comprenant la superposition et l'aiguilletage d'une pluralité de couches fibreuses ensemble pour former une préforme pour un composite carbone-carbone, dans lequel chaque couche fibreuse de la pluralité de couches fibreuses comprend :
des fibres de nappe, dans lequel les fibres de nappe comprennent au moins l'une parmi fibres de carbone ou fibres de précurseur de carbone ; et
des fibres de mèche, dans lequel les fibres de mèche comprennent au moins l'une parmi fibres de carbone ou fibres de précurseur de carbone ;
dans lequel les fibres de mèche sont des fibres qui sont continues ou relativement longues en comparaison aux fibres de nappe et qui sont alignées dans une seule direction et regroupées ensemble pour former une ou plusieurs mèches ; et
dans lequel les au moins une fibres de carbone ou fibres de précurseur de carbone des fibres de nappe comprennent au moins l'une parmi fibres coupées, fibres discontinues ou fibres courtes, et les fibres de nappe ont une orientation de fibre aléatoire les unes par rapport aux autres et par rapport aux fibres de mèche et sont relativement courtes en comparaison aux fibres de mèche ;
dans lequel la pluralité de couches fibreuses comprend :
une première couche fibreuse ;
une deuxième couche fibreuse ; et
une troisième couche fibreuse positionnée entre la première couche fibreuse et la deuxième couche fibreuse, dans lequel la troisième couche fibreuse comprend au moins l'une parmi :
une masse surfacique qui est supérieure à une masse surfacique de la première couche fibreuse ; ou
une épaisseur avant aiguilletage dans une direction d'un axe central de la préforme qui est supérieure à une épaisseur avant aiguilletage de la première couche fibreuse dans une direction d'un axe central de la préforme.

8. Procédé selon la revendication 7, dans lequel chaque couche fibreuse de la pluralité de couches fibreuses comprend une pluralité respective de segments de tissu duplex, dans lequel chaque segment de tissu duplex comprend une pluralité respective de fibres de nappe et une pluralité respective de fibres de mèche, et dans lequel l'aiguilletage de la pluralité de couches fibreuses ensemble comprend la superposition de la pluralité de segments de tissu duplex pour former une hélice, dans lequel chaque couche fibreuse de la pluralité de couches fibreuses réalise environ 0,9 à environ 1,2 tours de l'hélice.

9. Composite carbone-carbone comprenant :
un matériau de matrice carbone ; et
une pluralité de couches fibreuses superposées et aiguilletées ensemble, chaque couche fibreuse de la pluralité de couches fibreuses comprenant :
des fibres de nappe, dans lequel les fibres de nappe comprennent des fibres de carbone ; et
des fibres de mèche, dans lequel les fibres de mèche comprennent des fibres de carbone ;
dans lequel les fibres de mèche sont des fibres qui sont sensiblement continues ou relativement longues en comparaison aux fibres de nappe et qui sont alignées dans une seule direction et regroupées ensemble pour former une ou plusieurs mèches ; et
dans lequel les fibres de carbone des fibres de nappe comprennent au moins l'une parmi fibres coupées, fibres discontinues ou fibres courtes, et les fibres de nappe ont une orientation de fibre aléatoire les unes par rapport aux autres et par rapport aux fibres de mèche et sont relativement courtes en comparaison aux fibres de mèche ;
dans lequel la pluralité de couches fibreuses comprend :
une première couche fibreuse ;
une deuxième couche fibreuse ; et
une troisième couche fibreuse positionnée entre la première couche fibreuse et la deuxième couche fibreuse, dans lequel la troisième couche fibreuse comprend au moins l'une parmi :
une masse surfacique qui est supérieure à une masse surfacique de la première couche fibreuse ; ou
une épaisseur avant aiguilletage dans une direction d'un axe central de la préforme qui est supérieure à une épaisseur avant aiguilletage de la première couche fibreuse dans une direction d'un axe central de la préforme.
